# EUROPEAN PATENT APPLICATION

(11) **EP 4 851 685 A1**
(43) Date of publication of application: **09.12.2026**
(21) Application number: 24922136.7
(22) Date of filing: 11.11.2024
(51) Int. Cl.: G02B 6/26, G02B 6/02, G02B 6/04, G02B 6/32, G02B 6/42

(54) **OPTICAL COMBINER AND LASER DEVICE**

(30) Priority: 01.02.2024 JP 2024014016
(71) Applicant: FUJIKURA LTD., Koto-ku Tokyo 135-8512 (JP)
(72) Inventor: SUZUKI, Kiwamu, Sakura-shi, Chiba 285-8550 (JP)
(74) Representative: Bardehle Pagenberg Partnerschaft mbB Patentanwälte Rechtsanwälte
(86) International application number: PCT/JP2024/040017
(87) International publication number: WO 2025/164026

(57) **Abstract**

An optical combiner capable of reducing optical loss is provided. The optical combiner 1 has input optical fibers 10 each having a core 11 through which light propagates, divergence angle reduction portions 20 each having an incidence end portion 21 into which the light propagating through the core 11 of the input optical fiber 10 is incident and an emission end portion 22 that emits the light in a state in which a divergence angle has been reduced from a divergence angle at the incidence end portion 21, and a bridge fiber 40 including intermediate optical fibers 30 each having a core 31 into which the light emitted from the emission end portion 22 of the divergence angle reduction portion 20 is incident, wherein the bridge fiber 40 has a taper portion 42 in which an outer profile of the bundled intermediate optical fibers 30 becomes smaller toward a downstream side. The diameter of the core 31 at an upstream end of each of the intermediate optical fibers 30 is greater than the diameter of the core 11 at a downstream end of each of the input optical fibers 10.

## Description

### Technical Field

The present invention relates to an optical combiner and a laser apparatus.

### Background Art

Optical combiners have widely been used to couple laser beams from multiple light sources to output a high-power laser beam. There has been known an optical combiner produced by bundling multiple input optical fibers, fusion-drawing the bundle to reduce its diameter, and coupling the bundle of the optical fibers with the reduced diameter to an output optical fiber (see, e.g., Patent Literature 1). With such an optical combiner, the diameter or numerical aperture of cores located near the output optical fiber is greater than the diameter or numerical aperture of cores located near the input optical fibers (for example, paragraphs [0030]-[0034] of Patent Literature 1). The diameter or numerical aperture of the cores varies discontinuously at a fusion splice point with the output optical fiber along a light propagation direction. Accordingly, light with a large divergence angle (an angle of a direction in which light diverges with respect to an optical axis of the core) is produced, resulting in optical loss.

### Prior Art Literature

### Patent Literature

Patent Literature 1: JP 2011-186267 A

### Summary of the Invention

### Problem(s) to be Solved by the Invention

The present invention has been made in view of such drawbacks in the prior art. It is, therefore, an object of the present invention to provide an optical combiner capable of reducing optical loss and a laser apparatus including such an optical combiner.

### Means for Solving Problem(s)

Aspect 1 of the present invention is:
an optical combiner comprising:
   a plurality of input optical fibers each having a first core through which light propagates;
a plurality of divergence angle reduction portions each having an incidence end portion into which the light propagating through the first core of a corresponding input optical fiber of the plurality of input optical fibers is incident and an emission end portion that emits the light in a state in which a divergence angle has been reduced from a divergence angle at the incidence end portion; and
a first bridge fiber including a plurality of intermediate optical fibers each having a second core into which the light emitted from the emission end portion of a corresponding divergence angle reduction portion of the plurality of divergence angle reduction portions is incident, the first bridge fiber having a taper portion in which an outer profile of the bundled plurality of intermediate optical fibers becomes smaller toward a downstream side,
wherein a diameter of the second core at an upstream end of each of the plurality of intermediate optical fibers is greater than a diameter of the first core at a downstream end of each of the plurality of input optical fibers.

Aspect 2 of the present invention is:
the optical combiner as recited in Aspect 1, further comprising an output optical fiber having a third core into which the light propagating through the second core of the first bridge fiber is incident,
wherein the third core at an upstream end of the output optical fiber has a size that is large enough to encompass the second cores of the plurality of intermediate optical fibers at a downstream end of the first bridge fiber.

Aspect 3 of the present invention is:
the optical combiner as recited in Aspect 1 or 2, further comprising a second bridge fiber having a fourth core into which the light propagating through the second cores of the first bridge fiber is incident,
wherein the fourth core of the second bridge fiber at an upstream end of the second bridge fiber has a size that is large enough to encompass the second cores of the plurality of intermediate optical fibers at a downstream end of the first bridge fiber, and
the fourth core of the second bridge fiber has a diameter reduction core portion having a diameter reduced toward the downstream side.

Aspect 4 of the present invention is:
the optical combiner as recited in any one of Aspects 1 to 3, wherein each of the plurality of divergence angle reduction portions is formed by a GRIN lens having a refractive index that gradually decreases radially outward from a central axis, and
a refractive index distribution constant g of the GRIN lens is within a range defined by: $\frac{4 λ}{{πn}_{0} ωω ′} \times 0.9 < g < \frac{4 λ}{{πn}_{0} ωω ′} \times 1.1$ where *n*₀ is a refractive index at the central axis, *λ* is a wavelength of the light, ω is a mode field diameter of the input optical fiber for the fundamental mode, and ω' is a mode field diameter of the intermediate optical fiber for the fundamental mode.

Aspect 5 of the present invention is:
the optical combiner as recited in any one of Aspects 1 to 4, wherein each of the plurality of divergence angle reduction portions is formed by a GRIN lens having a refractive index that gradually decreases radially outward from a central axis, and
a length of the GRIN lens along an optical axis is within a range defined by: $\frac{\left(2m+0.9\right)}{4} \times \frac{2 π}{g} < L < \frac{\left(2m+1.1\right)}{4} \times \frac{2 π}{g}$ where m is an integer not less than 0, and g is a refractive index distribution constant of the GRIN lens.

Aspect 6 of the present invention is:
the optical combiner as recited in any one of Aspects 1 to 3, wherein each of the plurality of divergence angle reduction portions is formed by:
   a first GRIN lens connected to the input optical fiber, the first GRIN lens having a refractive index that gradually decreases radially outward from a central axis, and
   a second GRIN lens connected to the first GRIN lens and the intermediate optical fiber, the second GRIN lens having a refractive index that gradually decreases radially outward from a central axis, and
when a refractive index distribution constant of the first GRIN lens is g₁, a refractive index distribution constant of the second GRIN lens is g₂, a mode field diameter of the input optical fiber for the fundamental mode is ω, and a mode field diameter of the intermediate optical fiber for the fundamental mode is ω', the following relationship is established: $\frac{ω}{ω ′} \times 0.9 < \frac{{g}_{2}}{{g}_{1}} < \frac{ω}{ω ′} \times 1.1 .$

Aspect 7 of the present invention is:
the optical combiner as recited in Aspect 6, wherein a length L₁ of the first GRIN lens along an optical axis is within a range defined by: $\frac{\left(2j+0.9\right)}{4} \times \frac{2 π}{{g}_{1}} < {L}_{1} < \frac{\left(2j+1.1\right)}{4} \times \frac{2 π}{{g}_{1}}$ where *j* is an integer not less than 0,
a length *L*₂ of the second GRIN lens along an optical axis is within a range defined by: $\frac{\left(2k+0.9\right)}{4} \times \frac{2 π}{{g}_{2}} < {L}_{2} < \frac{\left(2k+1.1\right)}{4} \times \frac{2 π}{{g}_{2}}$ where *k* is an integer not less than 0.

Aspect 8 of the present invention is:
the optical combiner as recited in any one of Aspects 1 to 7, wherein an outer profile of a portion of the plurality of input optical fibers located upstream of the divergence angle reduction portions to the taper portion of the first bridge fiber becomes smaller toward the downstream side.

Aspect 9 of the present invention is:
a laser apparatus comprising:
a plurality of laser light sources operable to generate a laser beam; and
an optical combiner as recited in any one of Aspects 1 to 8,
wherein the first cores of the plurality of input optical fibers of the optical combiner are optically coupled to the plurality of laser light sources.

### Brief Description of Drawings

Fig. 1 is a perspective view showing an optical combiner according to a first embodiment of the present invention.
Fig. 2 is an exploded perspective view of the optical combiner in Fig. 1.
Fig. 3 is a cross-sectional view taken along an optical axis of the optical combiner in Fig. 1.
Fig. 4 is a cross-sectional view taken along an optical axis of an optical combiner according to a second embodiment of the present invention.
Fig. 5 is a cross-sectional view taken along an optical axis of an optical combiner according to a third embodiment of the present invention.
Fig. 6 is a cross-sectional view taken along an optical axis of an optical combiner according to a fourth embodiment of the present invention.
Fig. 7 is a diagram schematically showing an example of a laser apparatus including an optical combiner according to the present invention.
Fig. 8 is a diagram schematically showing another example of a laser apparatus including an optical combiner according to the present invention.

### Mode(s) for Carrying Out the Invention

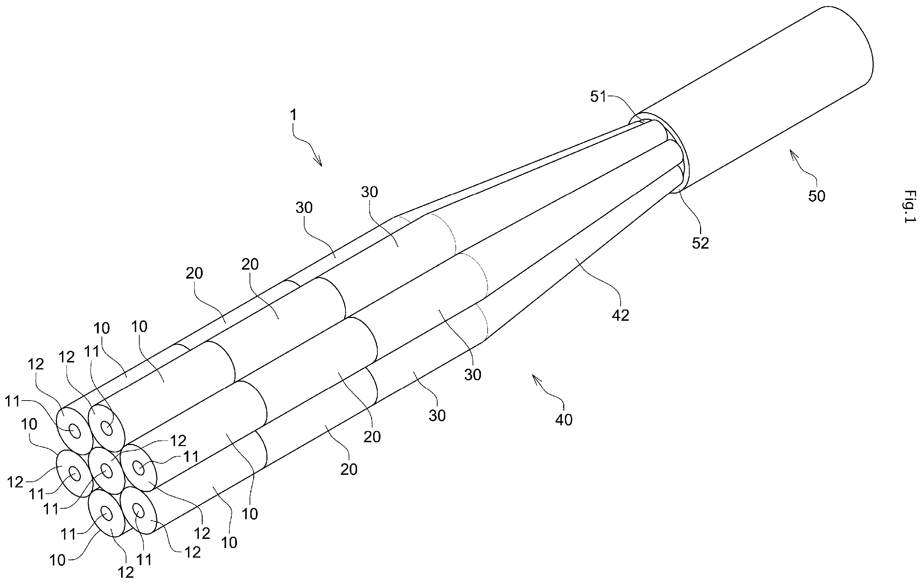

Embodiments of an optical combiner and a laser apparatus using an optical combiner according to the present invention will be described in detail below with reference to Figs. 1 to 8. In Figs. 1 to 8, the same or corresponding components are denoted by the same or corresponding reference numerals and will not be described below repetitively. Furthermore, in Figs. 1 to 8, the scales or dimensions of components may be exaggerated, and some components may be omitted. Unless otherwise mentioned, in the following description, terms such as "first," "second," and so forth are only used to distinguish one component from another and are not used to indicate a specific order or a specific sequence.

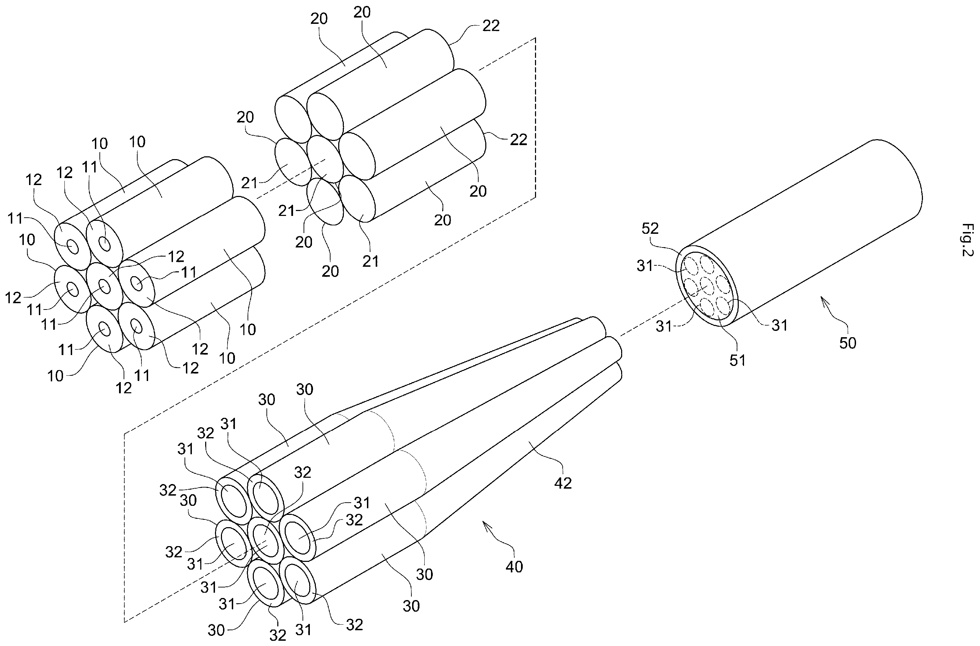

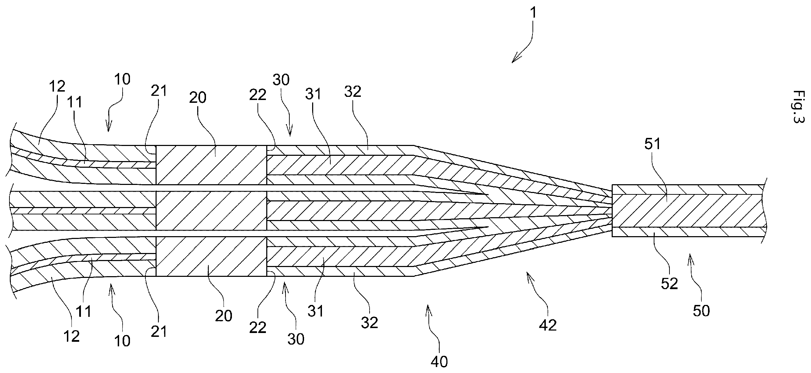

Fig. 1 is a perspective view showing an optical combiner 1 according to a first embodiment of the present invention, Fig. 2 is an exploded perspective view of the optical combiner 1, and Fig. 3 is a cross-sectional view taken along an optical axis of the optical combiner 1. Unless otherwise mentioned in the specification, the term "downstream" refers to a direction in which light propagates from a light source such as a laser light source as described later, and the term "upstream" refers to an opposite direction thereto. In Fig. 3, the left side represents the upstream side, and the right side represents the downstream side. As shown in Figs. 1 to 3, the optical combiner 1 includes a plurality of input optical fibers 10, a plurality of divergence angle reduction portions 20 each connected to a downstream end of the corresponding input optical fiber 10, a bridge fiber 40 (first bridge fiber) including intermediate optical fibers 30 each connected to a downstream end of the corresponding divergence angle reduction portion 20, and an output optical fiber 50 connected to a downstream end of the bridge fiber 40.

Each of the input optical fibers 10 includes a core 11 (first core) and a cladding 12 that surrounds a circumference of the core 11. The cladding 12 has a refractive index lower than a refractive index of the core 11. For example, the core 11 may be formed of silica glass (SiO₂), and a dopant having a property to lower the refractive index (e.g., fluorine (F) or boron (B)) may be doped to the silica glass to form the cladding 12. Alternatively, the cladding 12 may be formed of silica glass (SiO₂), and a dopant having a property to increase the refractive index (e.g., germanium (Ge)) may be doped to the silica glass to form the core 11. In this manner, an optical waveguide that allows light to propagate therethrough is formed in the core 11 of the input optical fiber 10. A portion of an outer circumference of the cladding 12 in each of the input optical fibers 10 that is not illustrated in Figs. 1 to 3 is covered with a covering (not shown) formed of resin, for example.

Each of the divergence angle reduction portions 20 is a cylindrical member having a function of reducing an output divergence angle of light propagating therethrough. The divergence angle reduction portion 20 has an incidence end portion 21 on which light propagating through the core 11 of the input optical fiber 10 is incident and an emission end portion 22 from which light that has propagated through the divergence angle reduction portion 20 is emitted. The divergence angle reduction portion 20 is configured such that light incident on the incidence end portion 21 is emitted from the emission end portion 22 with a divergence angle smaller than that a divergence angle at the incidence end portion 21. Specifically, as light from the core 11 of the input optical fiber 10 propagates through the divergence angle reduction portion 20, the light is emitted from the emission end portion 22 with a divergence angle reduced as compared to a divergence angle at the incidence end portion 21.

For example, a graded-index or gradient-index (GRIN) lens having a refractive index that gradually decreases radially outward from a central axis may be used as the divergence angle reduction portion 20. For example, such a GRIN lens may be formed by doping a high concentration of a dopant such as germanium (Ge) to a central portion of cylindrical glass made of quartz. The refractive index distribution of such a GRIN lens is represented by the following formula (1): ${n}^{2} \left(r\right) = {{n}_{0}}^{2} {sech}^{2} \left(gr\right) ≅ {{n}_{0}}^{2} {\left[1-{\left(gr\right)}^{2}\right]}^{2}$ (1) where *n*₀ is a refractive index at the central axis, *r* is a radial distance from the central axis, and *g* is a refractive index distribution constant.

The bridge fiber 40 is formed of a plurality of intermediate optical fibers 30 bundled together. The bridge fiber 40 has a taper portion 42 in which the outer profile of the bundled intermediate optical fibers 30 becomes smaller toward a downstream side. The cross-section of the taper portion 42 decreases toward the downstream side. Such a taper portion 42 can be formed by heating and fusion-drawing the bundle of the intermediate optical fibers 30.

As shown in Figs. 2 and 3, each of the intermediate optical fibers 30 includes a core 31 (second core) and a cladding 32 that surrounds a circumference of the core 31. The cladding 32 has a refractive index lower than a refractive index of the core 31. For example, the core 31 may be formed of silica glass (SiO₂), and a dopant having a property to lower the refractive index (e.g., fluorine (F) or boron (B)) may be doped to the silica glass to form the cladding 32. Alternatively, the cladding 32 may be formed of silica glass (SiO₂), and a dopant having a property to increase the refractive index (e.g., germanium (Ge)) may be doped to the silica glass to form the core 31. In this manner, an optical waveguide that allows light to propagate therethrough is formed in the core 31 of the intermediate optical fiber 30.

The output optical fiber 50 includes a core 51 (third core) and a cladding 52 that surrounds a circumference of the core 51. The cladding 52 has a refractive index lower than a refractive index of the core 51. For example, the core 51 may be formed of silica glass (SiO₂), and a dopant having a property to lower the refractive index (e.g., fluorine (F) or boron (B)) may be doped to the silica glass to form the cladding 52. Alternatively, the cladding 52 may be formed of silica glass (SiO₂), and a dopant having a property to increase the refractive index (e.g., germanium (Ge)) may be doped to the silica glass to form the core 51. In this manner, an optical waveguide that allows light to propagate therethrough is formed in the core 51 of the output optical fiber 50.

The incidence end portion 21 of the divergence angle reduction portion 20 has a diameter that is equal to or greater than a diameter of the core 11 of the input optical fiber 10. Furthermore, the core 31 at an upstream end of the intermediate optical fiber 30 has a diameter greater than a diameter of the core 11 at a downstream end of the input optical fiber 10. The core 51 at an upstream end of the output optical fiber 50 has a size (diameter) that is large enough to encompass all of the cores 31 of the intermediate optical fibers 30 at a downstream end of the bridge fiber 40 (as indicated by dotted lines in Fig. 2). The bridge fiber 40 and the output optical fiber 50 are connected to each other by fusion splice such that all of the cores 31 of the intermediate optical fibers 30 in the taper portion 42 are located within an area of the core 51 at the upstream end of the output optical fiber 50. In other words, the diameter of the core 51 at the upstream end of the output optical fiber 50 is equal to or greater than a diameter of a circumscribed circle of the cores 31 of the plurality of intermediate optical fibers 30 at the downstream end of the bridge fiber 40. Thus, all of the cores 31 of the plurality of intermediate optical fibers 30 at the downstream end of the bridge fiber 40 are contained within the core 51 at the upstream end of the output optical fiber 50. Even if the cores 31 of the plurality of intermediate optical fibers 30 have different diameters, the core 51 at the upstream end of the output optical fiber 50 has a size that is large enough to encompass all of the cores 31 of the plurality of intermediate optical fibers 30 at the downstream end of the bridge fiber 40.

When light propagates from an optical fiber having a core with a smaller diameter into an optical fiber having a core with a larger diameter, light having a large divergence angle is generated at a fusion splice point, resulting in optical loss. Light propagating through the core 11 of the input optical fiber 10 in a downstream direction enters the core 31 of the intermediate optical fiber 30 of the bridge fiber 40 in a state in which a divergence angle has been reduced by the divergence angle reduction section 20. Therefore, optical loss can be reduced as compared to a case where optical fibers having cores with different diameters are connected directly to each other by fusion splice. Furthermore, when the diameter of the core 31 is reduced at the taper portion 42, the divergence angle of light emitted from the taper portion 42 into the core 51 of the output optical fiber 50 can be made small. Accordingly, optical loss can be reduced at a fusion splice point between the bridge fiber 40 and the output optical fiber 50.

Additionally, since the outer profile of the taper portion 42 in the bridge fiber 40 becomes smaller toward the downstream side, the intermediate optical fibers 30 can densely be packed at this portion to reduce distances between centers of the cores 31. Therefore, the intensity of light entering the output optical fiber 50 from the bridge fiber 40 can be increased. Furthermore, a downstream end face of the aforementioned bridge fiber 40 can be formed by cutting a bundle of the intermediate optical fibers 30 after fusion-drawing. Accordingly, there is no need to align end faces of a plurality of intermediate optical fibers with a precision of, for example, 10 µm for fusion splicing.

In a case where the divergence angle reduction portion 20 is formed of a GRIN lens, adiabatic beam diameter conversion can be achieved (coupling of the fundamental mode to higher-order modes can be avoided) by setting a refractive index distribution constant g of the GRIN lens and a length L of the GRIN lens along an optical axis to the values represented by the following formulas (2) and (3): $g = \frac{4 λ}{{πn}_{0} ωω ′}$ (2) $L = \frac{\left(2m+1\right)}{4} \times \frac{2 π}{g}$ (3)

In the above formulas (2) and (3), n₀ represents a refractive index of the GRIN lens at its central axis, *λ* represents a wavelength of light propagating through the GRIN lens, ω represents a mode field diameter of the input optical fiber 10 for the fundamental mode, ω' represents a mode field diameter of the intermediate optical fiber 30 for the fundamental mode, and m is an integer not less than 0.

Accordingly, in order to achieve adiabatic beam diameter conversion, it is preferable that the refractive index distribution constant g of the GRIN lens and the length L of the GRIN lens along the optical axis be set within ±10% of the values given by the above formulas (2) and (3), respectively. Specifically, the following ranges are preferable: $\frac{4 λ}{{πn}_{0} ωω ′} \times 0.9 < g < \frac{4 λ}{{πn}_{0} ωω ′} \times 1.1$ $\frac{\left(2m+0.9\right)}{4} \times \frac{2 π}{g} < L < \frac{\left(2m+1.1\right)}{4} \times \frac{2 π}{g}$

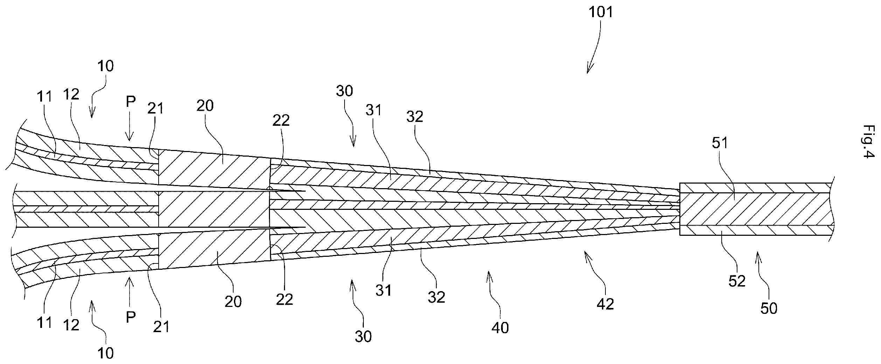

Fig. 4 is a cross-sectional view taken along an optical axis of an optical combiner 101 according to a second embodiment of the present invention. In the present embodiment, in addition to the taper portion 42 of the bridge fiber 40, the outer profile of a portion located upstream of the taper portion 42, i.e., from a portion P of the input optical fibers 10 that are located upstream of the divergence angle reduction portions 20 to the taper portion 42 of the bridge fiber 40, becomes smaller toward the downstream side.

In general, at the starting end of integration by fusion drawing, discontinuous bending is likely to occur due to effects such as sagging of the optical fiber during fusion and non-axisymmetry of the heat source. If such discontinuous bending occurs in the optical fiber, higher-order modes including a cladding mode are likely to be generated. The number of the higher-order modes generated is smaller when the optical fiber has a smaller core diameter. Therefore, when the starting end of integration by fusion drawing is located at a portion of the input optical fibers 10, which have a smaller core diameter than those of the intermediate optical fibers 30, as in the present embodiment, then it is possible to suppress generation of higher-order modes due to discontinuous bending that would occur at the starting end of integration by fusion drawing.

The formula (2) of the aforementioned first embodiment assumes that the refractive index distribution constant *g* of the GRIN lenses as the divergence angle reduction portions 20 is constant along the optical axis. In the present embodiment, however, the diameter of the divergence angle reduction portions 20 varies along the optical axis. Therefore, the refractive index distribution constant *g* varying along the optical axis needs to be considered when GRIN lenses are used as the divergence angle reduction portions 20.

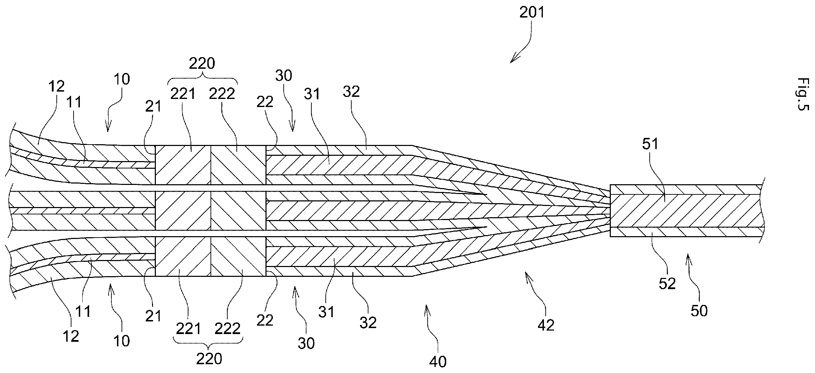

Fig. 5 is a cross-sectional view taken along an optical axis of an optical combiner 201 according to a third embodiment of the present invention. Each of divergence angle reduction portions 220 in the optical combiner 201 includes a first GRIN lens 221 connected to the input optical fiber 10 and a second GRIN lens 222 connected to the first GRIN lens 221 and the intermediate optical fiber 30. The respective GRIN lenses 221 and 222 are formed with similar specifications to those of the GRIN lens described in the first embodiment.

With use of such divergence angle reduction portions 220, the relationship expressed by the following formula (4) is established between the refractive index distribution constant *g*₁ of the first GRIN lens 221 and the refractive index distribution constant *g*₂ of the second GRIN lens 222. The input optical fibers 10 and the intermediate optical fibers 30 can adiabatically be connected to each other when the refractive index distribution constant *g*₁ of the first GRIN lens 221, the refractive index distribution constant *g*₂ of the second GRIN lens 222, the length *L*₁ of the first GRIN lens 221 along the optical axis, and the length *L*₂ of the second GRIN lens 222 along the optical axis are set at values expressed by the following formulas (5) and (6). $\frac{{g}_{2}}{{g}_{1}} = \frac{ω}{ω ′}$ (4) ${L}_{1} = \frac{\left(2j+1\right)}{4} \times \frac{2 π}{{g}_{1}}$ (5) ${L}_{2} = \frac{\left(2k+1\right)}{4} \times \frac{2 π}{{g}_{2}}$ (6)

In the above formulas (4) to (6), ω represents a mode field diameter of the input optical fiber 10 for the fundamental mode, ω' represents a mode field diameter of the intermediate optical fiber 30 for the fundamental mode, and each of j and k is an integer not less than 0.

Accordingly, in order to achieve adiabatic beam diameter conversion, it is preferable that the refractive index distribution constant g₁ of the first GRIN lens 221, the refractive index distribution constant g₂ of the second GRIN lens 222, the length L₁ of the first GRIN lens 221 along the optical axis, and the length L₂ of the second GRIN lens 222along the optical axis be set within ±10% of the values given by the above formulas (4) to (6). Specifically, the following ranges are preferable: $\frac{ω}{ω ′} \times 0.9 < \frac{{g}_{2}}{{g}_{1}} < \frac{ω}{ω ′} \times 1.1$ $\frac{4 λ}{{πn}_{01} ωω ′} \times 0.9 < {g}_{1} < \frac{4 λ}{{πn}_{01} ωω ′} \times 1.1$ $\frac{\left(2j+0.9\right)}{4} \times \frac{2 π}{{g}_{1}} < {L}_{1} < \frac{\left(2j+1.1\right)}{4} \times \frac{2 π}{{g}_{1}}$ $\frac{4 λ}{{πn}_{02} ωω ′} \times 0.9 < {g}_{2} < \frac{4 λ}{{πn}_{02} ωω ′} \times 1.1$ $\frac{\left(2k+0.9\right)}{4} \times \frac{2 π}{{g}_{2}} < {L}_{2} < \frac{\left(2k+1.1\right)}{4} \times \frac{2 π}{{g}_{2}}$ where n₀₁ represents a refractive index of the first GRIN lens 221 at its central axis, *n₀₂* represents a refractive index of the second GRIN lens 222 at its central axis, and *λ* represents a wavelength of light propagating through the first GRIN lens 221.

Use of the divergence angle reduction portions 220 each including the two GRIN lenses 221 and 222 as in the present embodiment may effectively suppress generation of higher-order modes including a cladding mode as compared to the case of using the divergence angle reduction portions 20 each including the single GRIN lens.

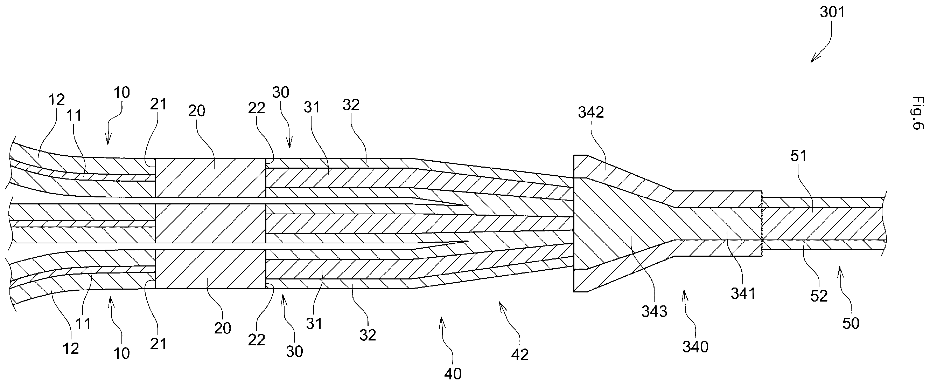

Fig. 6 is a cross-sectional view taken along an optical axis of an optical combiner 301 according to a fourth embodiment of the present invention. In the present embodiment, a second bridge fiber 340 is disposed between the bridge fiber 40 (first bridge fiber) and the output optical fiber 50 of the first embodiment. The second bridge fiber 340 includes a core 341 (fourth core) and a cladding 342 that surrounds a circumference of the core 341. The cladding 342 has a refractive index lower than a refractive index of the core 341. For example, the core 341 may be formed of silica glass (SiO₂), and a dopant having a property to lower the refractive index (e.g., fluorine (F) or boron (B)) may be doped to the silica glass to form the cladding 342. Alternatively, the cladding 342 may be formed of silica glass (SiO₂), and a dopant having a property to increase the refractive index (e.g., germanium (Ge)) may be doped to the silica glass to form the core 341. In this manner, an optical waveguide that allows light to propagate therethrough is formed in the core 341 of the second bridge fiber 340.

The core 341 at an upstream end of the second bridge fiber 340 has a size (diameter) that is large enough to encompass all of the cores 31 of the intermediate optical fibers 30 at a downstream end of the first bridge fiber 40 (as indicated by dotted lines in Fig. 2). The first bridge fiber 40 and the second bridge fiber 340 are connected to each other by fusion splice such that all of the cores 31 of the intermediate optical fibers 30 in the taper portion 42 of the first bridge fiber 40 are located within an area of the core 341 at the upstream end of the second bridge fiber 340. In other words, the diameter of the core 341 at the upstream end of the second bridge fiber 340 is equal to or greater than a diameter of a circumscribed circle of the cores 31 of the plurality of intermediate optical fibers 30 at the downstream end of the first bridge fiber 40. Thus, all of the cores 31 of the plurality of intermediate optical fibers 30 at the downstream end of the first bridge fiber 40 are contained within the core 341 at the upstream end of the second bridge fiber 340. Even if the cores 31 of the plurality of intermediate optical fibers 30 have different diameters, the core 341 at the upstream end of the second bridge fiber 340 has a size that is large enough to encompass all of the cores 31 of the plurality of intermediate optical fibers 30 at the downstream end of the first bridge fiber 40.

The core 341 of the second bridge fiber 340 includes a diameter reduction core portion 343 having a diameter gradually reduced toward the downstream side. Such a diameter reduction core portion 343 can be formed by heating and fusion-drawing an optical fiber having a large diameter. Unlike the first bridge fiber 40, this second bridge fiber 340 is not formed by fusion-drawing a bundle of a plurality of intermediate optical fibers 30. Therefore, the second bridge fiber 340 can readily be designed such that a divergence angle of output light is closer to an ideal value. A diameter reduction ratio of the second bridge fiber 340 (a ratio of an outside diameter of a portion that has not reduced in diameter to an outside diameter of a portion that has been most reduced in diameter) can readily be increased as compared to that of the first bridge fiber 40. Accordingly, use of the second bridge fiber 340 including the diameter reduction core portion 343 can suppress a diameter reduction ratio of the taper portion 42 in the first bridge fiber 40. Thus, cross talk is unlikely to occur between adjacent cores 31 in the taper portion 42 of the first bridge fiber 40, and optical characteristics of light outputted to the output optical fiber 50 can readily be improved.

In the second bridge fiber 340 of the present embodiment, the cladding 342 is formed around the core 341. Any medium having a refractive index lower than that of the core 341 (e.g., air) may be present outside of the core 341. Therefore, the second bridge fiber 340 may not necessarily include the cladding 342.

In the above embodiments, the output optical fiber 50 is connected to the downstream side of the bridge fiber 40 or the second bridge fiber 340. In cases where light is emitted from the bridge fiber 40 or the second bridge fiber 340 to an ambient space or the like, it is unnecessary to connect the output optical fiber 50 to the downstream side of the bridge fiber 40 or the second bridge fiber 340.

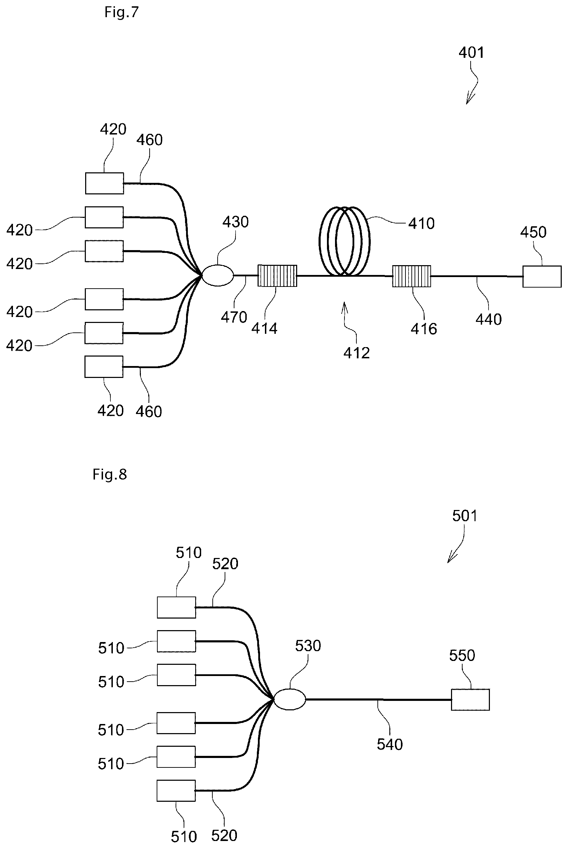

Fig. 7 is a diagram schematically showing a fiber laser apparatus 401 as a laser apparatus including the aforementioned optical combiner. As shown in Fig. 7, the fiber laser apparatus 401 has an optical cavity 412 including an amplification optical fiber 410 capable of amplifying a laser beam, a plurality of pumping light sources 420 (laser light source) operable to provide pumping light to one end of the optical cavity 412, an optical combiner 430 operable to combine the pumping light outputted from the plurality of pumping light sources 420 and allow the combined pumping light to enter the optical cavity 412, a delivery fiber 440 extending from the optical cavity 412, and a laser output portion 450 provided on a downstream end of the delivery fiber 440. Each of the pumping light sources 420 is connected to the optical combiner 430 by an optical fiber 460. The optical combiner 430 is connected to the optical cavity 412 by an optical fiber 470.

The amplification optical fiber 410 of the optical cavity 412 has a core to which rare earth element ions, such as ytterbium (Yb), erbium (Er), thulium (Tm), and neodymium (Nd), have been doped. For example, the amplification optical fiber 410 may be formed by a double-clad fiber having an inner cladding formed around a core and an outer cladding formed around the inner cladding.

The optical cavity 412 includes a high-reflectivity portion 414 that reflects light having a certain wavelength range (e.g., 1060 nm to 1100 nm) with a high reflectivity and a low-reflectivity portion 416 that reflects light having the aforementioned wavelength range with a reflectivity lower than that of the high-reflectivity portion 414. For example, the high-reflectivity portion 414 and the low-reflectivity portion 416 can be formed by fiber Bragg grating (FBG), which is formed by periodically varying the refractive index of an optical fiber along the light propagation direction, or a mirror. In the example illustrated in Fig. 7, the high-reflectivity portion 414 and the low-reflectivity portion 416 are formed by fiber Bragg grating.

The optical fiber 460 connected to the pumping light source 420 has a core and a cladding that surrounds a circumference of the core and has a refractive index lower than a refractive index of the core. An optical waveguide that allows pumping light generated in the pumping light source 420 to propagate therethrough is formed in the core of the optical fiber 460. For example, a high-power multi-mode semiconductor laser device capable of emitting a laser beam having a wavelength of, for example, 975 nm may be used for the pumping light sources 420. Pumping light generated by the respective pumping light sources 420 propagates through the cores of the optical fibers 460 toward the optical combiner 430, combines together at the optical combiner 430, and enters the optical cavity 412.

The pumping light that has entered the optical cavity 412 from the pumping light sources 420 through the optical combiner 430 propagates through the inner cladding and the core of the amplification optical fiber 410. The pumping light is absorbed to the rare earth element ions doped to the core while it passes across the core, so that the rare earth element ions are excited to produce spontaneous emission. The spontaneous emission is recursively reflected between the high-reflectivity portion 414 and the low-reflectivity portion 416, so that light having a specific wavelength (e.g., 1070 nm) is amplified to cause laser oscillation. The laser beam thus amplified in the optical cavity 412 propagates through the core of the amplification optical fiber 410. A portion of the laser beam passes through the low-reflectivity portion 416. The portion of the laser beam that has passed through the low-reflectivity portion 416 is allowed to propagate through the core of the delivery fiber 440 and then outputted from the laser output portion 450.

The optical combiner 1, 101, 201, or 301 of the aforementioned embodiments can be used as the optical combiner 430 in the fiber laser apparatus 401. In this case, portions of the optical fibers 460 extending from the pumping light sources 420 may form the input optical fibers 10 of the aforementioned optical combiner 1, 101, 201, or 301. Alternatively, the input optical fibers 10 of the optical combiner 1, 101, 201, or 301 may be connected to the optical fibers 460, so that the cores 11 of the input optical fibers 10 are optically coupled to the pumping light sources 420. Furthermore, a portion of the optical fiber 470 may form the output optical fiber 50 of the optical combiner 1, 101, 201, or 301. Alternatively, the output optical fiber 50 of the optical combiner 1, 101, 201, or 301 may be connected to the optical fiber 470.

As fiber laser apparatuses other than the configuration illustrated in Fig. 7, there have been known MOPA fiber laser apparatuses that amplify seed light from a seed light source with pumping light from a pumping light source. As a matter of course, the aforementioned optical combiners 1, 101, 201, and 301 are applicable to such a MOPA fiber laser apparatus.

Fig. 8 is a diagram schematically showing a laser apparatus 501 including an optical combiner according to the present invention. The laser apparatus 501 has a plurality of laser generation units 510 (laser light sources) operable to generate a laser beam, optical fibers 520 that allow the laser beams outputted from the respective laser generation units 510 to propagate therethrough, an optical combiner 530 operable to combine the laser beams propagating through the respective optical fibers 520, a delivery fiber 540 extending from the optical combiner 530, and a laser output portion 550 provided on a downstream end of the delivery fiber 540. For example, the fiber laser apparatus 401 illustrated in Fig. 7 may be used as the laser generation unit 510. The laser apparatus 501 can combine outputs from a plurality of fiber laser apparatuses 401 to output a laser beam having an increased power.

The optical combiner 1, 101, 201, or 301 of the aforementioned embodiments can be used as the optical combiner 530 in the laser apparatus 501. In this case, portions of the optical fibers 520 extending from the laser generation units 510 may form the input optical fibers 10 of the aforementioned optical combiner 1, 101, 201, or 301. Alternatively, the input optical fibers 10 of the optical combiner 1, 101, 201, or 301 may be connected to the optical fibers 520, so that the cores 11 of the input optical fibers 10 are optically coupled to the laser generation units 510. Furthermore, a portion of the delivery fiber 540 may form the output optical fiber 50 of the optical combiner 1, 101, 201, or 301. Alternatively, the output optical fiber 50 of the optical combiner 1, 101, 201, or 301 may be connected to the delivery fiber 540.

Although some preferred embodiments of the present invention have been described, the present invention is not limited to the aforementioned embodiments. It should be understood that various different forms may be applied to the present invention within the technical idea thereof.

This application claims the benefit of priority from Japanese patent application No. 2024-014016, filed on February 1, 2024, the disclosure of which is incorporated herein in its entirety by reference.

### Industrial Applicability

The present invention is suitably used for an optical combiner and a laser apparatus.

### Description of Reference Numerals and Signs

- 1, 101, 201, 301: Optical combiner
- 10: Input optical fiber
- 11: Core (first core)
- 12: Cladding
- 20, 220: Divergence angle reduction portion
- 21: Incidence end portion
- 22: Emission end portion
- 30: Intermediate optical fiber
- 31: Core (second core)
- 32: Cladding
- 40: Bridge fiber (first bridge fiber)
- 42: Taper portion
- 50: Output optical fiber
- 51: Core (third core)
- 52: Cladding
- 221: First GRIN lens
- 222: Second GRIN lens
- 340: Second bridge fiber
- 341: Core (fourth core)
- 342: Cladding
- 343: Diameter reduction core portion
- 401: Fiber laser apparatus (laser apparatus)
- 420: Pumping light sources (laser light source)
- 430, 530: Optical combiner
- 501: Laser apparatus
- 510: Laser generation unit (laser light source)

## Claims

1. An optical combiner comprising:
a plurality of input optical fibers each having a first core through which light propagates;
a plurality of divergence angle reduction portions each having an incidence end portion into which the light propagating through the first core of a corresponding input optical fiber of the plurality of input optical fibers is incident and an emission end portion that emits the light in a state in which a divergence angle has been reduced from a divergence angle at the incidence end portion; and
a first bridge fiber including a plurality of intermediate optical fibers each having a second core into which the light emitted from the emission end portion of a corresponding divergence angle reduction portion of the plurality of divergence angle reduction portions is incident, the first bridge fiber having a taper portion in which an outer profile of the bundled plurality of intermediate optical fibers becomes smaller toward a downstream side,
wherein a diameter of the second core at an upstream end of each of the plurality of intermediate optical fibers is greater than a diameter of the first core at a downstream end of each of the plurality of input optical fibers.

2. The optical combiner as recited in claim 1, further comprising an output optical fiber having a third core into which the light propagating through the second core of the first bridge fiber is incident,
wherein the third core at an upstream end of the output optical fiber has a size that is large enough to encompass the second cores of the plurality of intermediate optical fibers at a downstream end of the first bridge fiber.

3. The optical combiner as recited in claim 1 or 2, further comprising a second bridge fiber having a fourth core into which the light propagating through the second cores of the first bridge fiber is incident,
wherein the fourth core of the second bridge fiber at an upstream end of the second bridge fiber has a size that is large enough to encompass the second cores of the plurality of intermediate optical fibers at a downstream end of the first bridge fiber, and
the fourth core of the second bridge fiber has a diameter reduction core portion having a diameter reduced toward the downstream side.

4. The optical combiner as recited in any one of claims 1 to 3, wherein each of the plurality of divergence angle reduction portions is formed by a GRIN lens having a refractive index that gradually decreases radially outward from a central axis, and
a refractive index distribution constant *g* of the GRIN lens is within a range defined by: $\frac{4 λ}{{πn}_{0} ωω ′} \times 0.9 < g < \frac{4 λ}{{πn}_{0} ωω ′} \times 1.1$ where *n*₀ is a refractive index at the central axis, *λ* is a wavelength of the light, *ω* is a mode field diameter of the input optical fiber for the fundamental mode, and *ω*' is a mode field diameter of the intermediate optical fiber for the fundamental mode.

5. The optical combiner as recited in any one of claims 1 to 4, wherein each of the plurality of divergence angle reduction portions is formed by a GRIN lens having a refractive index that gradually decreases radially outward from a central axis, and
a length of the GRIN lens along an optical axis is within a range defined by: $\frac{\left(2m+0.9\right)}{4} \times \frac{2 π}{g} < L < \frac{\left(2m+1.1\right)}{4} \times \frac{2 π}{g}$ where *m* is an integer not less than 0, and *g* is a refractive index distribution constant of the GRIN lens.

6. The optical combiner as recited in any one of claims 1 to 3, wherein each of the plurality of divergence angle reduction portions is formed by:
a first GRIN lens connected to the input optical fiber, the first GRIN lens having a refractive index that gradually decreases radially outward from a central axis, and
a second GRIN lens connected to the first GRIN lens and the intermediate optical fiber, the second GRIN lens having a refractive index that gradually decreases radially outward from a central axis, and
when a refractive index distribution constant of the first GRIN lens is g₁, a refractive index distribution constant of the second GRIN lens is g₂, a mode field diameter of the input optical fiber for the fundamental mode is ω, and a mode field diameter of the intermediate optical fiber for the fundamental mode is ω', the following relationship is established: $\frac{ω}{ω ′} \times 0.9 < \frac{{g}_{2}}{{g}_{1}} < \frac{ω}{ω ′} \times 1.1 .$

7. The optical combiner as recited in claim 6, wherein a length L₁ of the first GRIN lens along an optical axis is within a range defined by: $\frac{\left(2j+0.9\right)}{4} \times \frac{2 π}{{g}_{1}} < {L}_{1} < \frac{\left(2j+1.1\right)}{4} \times \frac{2 π}{{g}_{1}}$ where j is an integer not less than 0,
a length L₂ of the second GRIN lens along an optical axis is within a range defined by: $\frac{\left(2k+0.9\right)}{4} \times \frac{2 π}{{g}_{2}} < {L}_{2} < \frac{\left(2k+1.1\right)}{4} \times \frac{2 π}{{g}_{2}}$ where k is an integer not less than 0.

8. The optical combiner as recited in any one of claims 1 to 7, wherein an outer profile of a portion of the plurality of input optical fibers located upstream of the divergence angle reduction portions to the taper portion of the first bridge fiber becomes smaller toward the downstream side.

9. A laser apparatus comprising:
a plurality of laser light sources operable to generate a laser beam; and
an optical combiner as recited in any one of claims 1 to 8,
wherein the first cores of the plurality of input optical fibers of the optical combiner are optically coupled to the plurality of laser light sources.
